# FASCICULE DE BREVET EUROPEEN

(11) **EP 0 924 968 B1**
(45) Date de publication et mention de la délivrance du brevet: **24.09.2003**
(21) Numéro de dépôt: 98403047.8
(22) Date de dépôt: 04.12.1998
(51) Int. Cl.: H05H 1/42

(54) **Mélange gazeux pour projection plasma et application de ce mélange à la projection plasma de matériaux réfractaires**
Gasmischung für Plasmaspritzen und ihre Verwendung für Feuerfestmaterial-Plasmaspritzen
Gas compound for plasma spraying and its application to refractory material plasma spraying

(30) Priorité: 10.12.1997 FR 9715625
(43) Date de publication de la demande: 23.06.1999
(73) Titulaire: L'air Liquide, S.A. à Directoire et Conseil de Surveillance pour l'Etude et l'Exploitation des Procédés Georges Claude, 75321 Paris Cedex 07 (FR)
(72) Inventeur: Gourlaouen, Vincent, 78800 Houilles (FR); Remy, François, 95130 Franconville (FR)
(74) Mandataire: Pittis, Olivier

(56) Documents cités:
- EP-A- 0 451 051
- EP-A- 0 664 181
- FR-A- 2 639 346
- PATENT ABSTRACTS OF JAPAN vol. 006, no. 106 (M-213), 10 mai 1983 & JP 58 029581 A (TEISAN KK), 21 février 1983
- PATENT ABSTRACTS OF JAPAN vol. 012, no. 160 (M-697), 14 mai 1988 & JP 62 279083 A (JAPAN STEEL WORKS LTD:THE), 3 décembre 1987

## Description

La présente invention concerne un mélange gazeux ternaire et son utilisation dans un procédé de projection plasma notamment de matériaux réfractaires.

La projection plasma est un procédé de traitement thermique permettant de réaliser un revêtement superficiel sur un objet, une pièce ou analogue, ledit revêtement pouvant alors, selon le cas, remplir un rôle de dépôt anti-usure, anticorrosion, antifriction ou de barrière thermique et/ou électrique.

De façon connue en soit, la projection plasma est un procédé de revêtement thermique consistant à introduire un matériau particulaire dans un jet de gaz plasmagène au sein duquel les particules sont fondues et accélérées avant de venir s'écraser sur la surface de la pièce à revêtir.

Parmi les différents types de matériaux particulaires utilisables dans un procédé de projection plasma, on peut citer les poudres métalliques constituées d'un métal pur ou d'un alliage de plusieurs métaux, les poudres composites, par exemple une poudre de carbure de tungstène dans une matrice de cobalt, où les poudres céramiques, tels les oxydes réfractaires, par exemple les oxydes d'alumine, de zircone, de chrome, les composés mixtes de type mélange alumine/dioxyde de titane...

Habituellement, les gaz utilisés en projection plasma sont des mélanges notamment binaires, ternaires ou quaternaires d'argon, d'hydrogène, d'azote et/ou d'hélium dont les proportions respectives varient considérablement en fonction notamment du matériau projeté et/ou du matériau à revêtir.

Ainsi, le document EP-A-0451051 décrit un mélange de gaz plasmagène constitué d'un mélange ternaire d'hélium, d'argon et d'hydrogène, lequel contient de 30 à 70% d'hélium, de 10 à 50% d'argon et de 8 à 25% d'hydrogène.

En outre, le document EP-A-0639427 décrit, quant à lui, des mélanges gazeux comprenant de 4 à 5 constituants, à savoir des mélanges comprenant de l'argon, de l'hélium, de l'hydrogène et du dioxyde de carbone et/ou de l'oxygène.

Par ailleurs, des mélanges gazeux binaires argon/hydrogène et argon/hélium ont déjà été décrits.

Actuellement, les procédés de projection plasma mettent en oeuvre différents types de torches qui peuvent être divisés en deux catégories, à savoir les torches haute-puissance et les torches basse-puissance.

Plus précisément, les torches haute-puissance fonctionnent habituellement à des intensités de courant élevées, typiquement de l'ordre de 500 à 600A et à des débits de gaz importants, par exemple de l'ordre de 50 à 60 l/mn.

Ce type de torche est habituellement utilisé notamment pour le dépôt de matériaux réfractaires, par exemple les matériaux de type zircone yttriée.

A l'inverse, les torches basse-puissance fonctionnent à des intensités de courant plus faibles, en général de 300 à 450A environ, et à des débits de gaz moins importants, par exemple de l'ordre de 30 à 40 l/mn.

Jusqu'alors, les torches basse-puissance n'étaient que peu utilisées pour la projection plasma de matériaux réfractaires, sauf dans certains cas, par exemple lorsque le dégagement de chaleur doit rester relativement faible de manière à éviter une surchauffe du support.

Or, de plus en plus, on souhaite généraliser l'utilisation d'une torche basse-puissance pour tout type d'application de projection plasma de matériaux réfractaires et ce, de manière à obtenir des résultats au moins comparables à ceux obtenus avec les torches haute-puissance utilisées actuellement.

Cependant, il a été observé par les inventeurs de la présente invention que les mélanges gazeux plasmagènes utilisés jusqu'à présent avec les torches haute-puissance ne sont pas adaptés aux torches basse-puissance.

En effet, des essais réalisés au moyen d'un mélange ternaire argon/hydrogène/hélium conforme à l'art antérieur ont révélé une trop grande puissance énergétique conduisant à une détérioration rapide de la torche.

Le but de la présente invention est donc de proposer un gaz plasmagène susceptible d'être utilisé notamment avec les torches basse-puissance, tout en permettant une nette augmentation du rendement de projection par rapport au mélange traditionnel.

La présente invention concerne alors un gaz pour la projection plasma constitué d'un mélange ternaire d'hélium, d'argon et d'hydrogène, caractérisé en ce qu'il contient moins de 30% d'hélium, au moins 55% d'argon et de 5, 5 à 15% d'hydrogène.

Selon le cas, le gaz plasmagène selon l'invention peut comprendre l'une ou plusieurs des caractéristiques suivantes:
- il contient au moins 60% d'argon;
- il contient de 15 à 29% d'hélium et, de préférence, au moins 20% d'hélium;
- il contient de 6 à 14% d'hydrogène, de préférence de 7 à 13% d'hydrogène, de préférence de 8 à 12% d'hydrogène et, de préférence, de l'ordre de 10 % ± 1% d'hydrogène;
- il contient de l'ordre de 70% ± 5% d'argon;
- il contient environ 10% d'hydrogène, de 20 à 25% d'hélium, le résiduel étant de l'argon et, éventuellement, des impuretés.

L'invention concerne, en outre, l'application du gaz plasmagène susmentionné à la projection plasma d'au moins une poudre d'un matériau métallique ou réfractaire, telle une céramique.

L'invention concerne également un procédé de projection thermique susceptible de mettre en oeuvre un gaz plasmagène selon l'invention, notamment un procédé dans lequel le gaz plasmagène est délivré par une torche basse-puissance.

Selon un autre aspect, l'invention concerne aussi un procédé de réalisation d'un mélange gazeux ternaire plasmagène, dans lequel le mélange ternaire comprenant de l'argon, de l'hélium et de l'hydrogène, ledit mélange pouvant être réalisé directement sur site d'utilisation, ou pouvant être acheminé sur le site d'utilisation au moyen de canalisations, de bouteilles ou analogues.

La présente invention va maintenant être décrite plus en détail à l'aide d'exemples donnés à titre illustratif, mais non limitatif.

### EXEMPLES

Des dépôts de poudre ZrO₂/Y₂O₃ (à 7% Y₂O₃) sur des échantillons d'acier ont été réalisés au moyen d'une torche basse-puissance de type classique, telle la torche commercialisée par la société SULZER-METCO sous la référence SM-F100 CONNEX.

Préalablement à la projection plasma, les échantillons-tests sont sablés avec du CORINDON (grade 300).

Les essais E1 et E2 ont été réalisés avec un gaz plasmagène ayant des teneurs variables en argon, en hydrogène et en hélium, ainsi que donné dans le tableau ci-après.

Dans chaque essai, on détermine:
- la porosité du dépôt obtenu par observation de celui-ci au microscope électronique à balayage et détermination de la présence ou l'absence de particules de ZrO₂/Y₂O₃ infondues ou malfondues;
- l'augmentation de rendement de projection par rapport à une référence (REF) Ar/H₂ ; et
- l'état de la torche, c'est-à-dire une éventuelle détérioration de la tuyère.

Les résultats obtenus sont consignés dans le tableau ci-après.

**TABLEAU**

| **ESSAI N°** | **E1** | **E2** | **REF** |
|---|---|---|---|
| Ar (%) | 70 | 65 | 90 |
| H₂ (%) | 10 | 10 | 10 |
| He (%) | 20 | 25 | 0 |
| Intensité (A) | 340 | 340 | 340 |
| Tension (V) | 49 | 49 | 46 |
| Débit Poudre (g/mn) | 29 | 29 | 29 |
| Débit gaz vecteur de poudre (l/mn) | 2,1 | 2,1 | 2,1 |
| Porosité totale (%) | 7,2 | 9,9 | 8,9 |
| Augmentation de Rendement (%) | + 22 | + 22 | 0 |
| Détérioration tuyère | non | non | N. D. |
| N. D.: non déterminé. | | | |

Il ressort du tableau précédent que des résultats favorables sont obtenus pour les essais E1 et E2, c'est-à-dire pour des gaz plasmagènes ayant une teneur en argon, hydrogène et hélium conforme à celle du gaz de la présente invention.

En effet, dans le cas des essais E1 et E2, on constate une augmentation du rendement d'environ 22% pour une porosité inférieure à 10% et une absence de détérioration de la tuyère de la torche.

Il en résulte que la projection plasma de matériaux réfractaires, tel que ZrO₂/Y₂O₃, mettant en oeuvre un mélange ternaire (argon/hélium/hydrogène) contenant moins de 30% d'hélium, de préférence de 20 à 25% d'hélium, au moins 55% d'argon, et de 5 à 15% d'hydrogène, de préférence de l'ordre de 8 à 10% d'hydrogène permet d'obtenir, de manière surprenante, une augmentation du rendement, une porosité totale acceptable et une absence de détérioration de la tuyère de la torche.

De là, le gaz plasmagène selon l'invention pourra avantageusement être utilisée dans un procédé de projection thermique, en particulier un procédé de projection plasma d'au moins une poudre d'un matériau réfractaire, tels Cr₂O₃ ou ZrO₂/Y₂O₃, . . .

De préférence, l'opération de projection plasma sera effectuée à un débit de 30 à 40 l/mn et/ou à une intensité inférieure à 450A.

## Revendications

1. Gaz pour la projection plasma constitué d'un mélange ternaire d'hélium, d'argon et d'hydrogène, **caractérisé en ce qu'**il contient moins de 30% d'hélium, au moins 55% d'argon et de 5,5 à 15% d'hydrogène.

2. Gaz pour la projection plasma selon la revendication 1, **caractérisé en ce que** qu'il contient au moins 60% d'argon.

3. Gaz pour la projection plasma selon l'une des revendications 1 ou 2, **caractérisé en ce qu'**il contient de 15 à 29% d'hélium, de préférence au moins 20% d'hélium.

4. Gaz pour la projection plasma selon l'une des revendications 1 à 3, **caractérisé en ce qu'**il contient de 6 à 14% d'hydrogène, de préférence de 8 à 12% d'hydrogène, de préférence 10% ± 1% d'hydrogène.

5. Gaz pour la projection plasma selon l'une des revendications 1 à 4, **caractérisé en ce qu'**il contient de 70% ± 5% d'argon.

6. Gaz pour la projection plasma selon l'une des revendications 1 à 5, **caractérisé en ce qu'**il comprend environ 10% d'hydrogène, de 20 à 25% d'hélium, le résiduel étant de l'argon et, éventuellement, des impuretés.

7. Application du gaz pour la projection plasma selon l'une des revendications 1 à 6, à la projection plasma d'au moins une poudre d'un matériau réfractaire et/ou d'au moins un matériau métallique.

8. Procédé de projection thermique susceptible de mettre en oeuvre un gaz pour la projection plasma selon l'une des revendications 1 à 6.

9. Procédé de traitement thermique selon la revendication 8, **caractérisé en ce que** le gaz pour la projection plasma est délivré par une torche basse-puissance.

10. Procédé de réalisation d'un mélange gazeux ternaire pour la projection plasma selon l'une des revendications 1 à 6, **caractérisé en ce que** le mélange gazeux est réalisé sur site d'utilisation.

## Patentansprüche

1. Gas zum Plasmaspritzen bestehend aus einem ternären Gemisch aus Helium, Argon und Wasserstoff, **dadurch gekennzeichnet, dass** es zumindest 30% Helium, zumindest 55% Argon und zwischen 5,5 und 15% Wasserstoff enthält.

2. Gas zum Plasmaspritzen nach Anspruch 1, **dadurch gekennzeichnet, dass** es zumindest 60% Argon enthält.

3. Gas zum Plasmaspritzen nach einem der Ansprüche 1 bis 2, **dadurch gekennzeichnet, dass** es zwischen 15 und 29% Helium und vorzugsweise zumindest 20% Helium enthält.

4. Gas zum Plasmaspritzen nach einem der Ansprüche 1 bis 3, **dadurch gekennzeichnet, dass** es zwischen 6 und 14% Wasserstoff, vorzugsweise zwischen 8 und 12% Wasserstoff und vorzugsweise 10% ± 1% Wasserstoff enthält.

5. Gas zum Plasmaspritzen nach einem der Ansprüche 1 bis 4, **dadurch gekennzeichnet, dass** es 70% ± 5% Argon enthält.

6. Gas zum Plasmaspritzen nach einem der Ansprüche 1 bis 5, **dadurch gekennzeichnet, dass** ungefähr 10% Wasserstoff, zwischen 20 und 25% Helium enthält, wobei der Rest Argon und eventuell Verunreinigungen sind.

7. Verwendung des Gases zum Plasmaspritzen nach einem der Ansprüche 1 bis 6 zum Plasmaspritzen zumindest eines Pulvers eines hitzebeständigen Materials und/oder zumindest eines Metallmaterials.

8. Verfahren zum Wärmespritzen, das in der Lage ist, ein Gas zum Plasmaspritzen nach einem der Ansprüche 1 bis 6 einzusetzen.

9. Verfahren zur Wärmebehandlung nach Anspruch 8,
**dadurch gekennzeichnet, dass** das Gas zum Plasmaspritzen durch einen Niederdruckbrenner abgegeben wird.

10. Verfahren zur Herstellung eines ternären Gasgemischs zum Plasmaspritzen nach einem der Ansprüche 1 bis 6, **dadurch gekennzeichnet, dass** das Gasgemisch am Verwendungsort hergestellt wird.

## Claims

1. Gas for plasma spraying, composed of a ternary mixture of helium, argon and hydrogen, **characterized in that** it contains less than 30% helium, at least 55% argon and from 5.5 to 15% hydrogen.

2. Plasma spraying gas according to Claim 1, **characterized in that** it contains at least 60% argon.

3. Plasma spraying gas according to either of Claims 1 and 2, **characterized in that** it contains from 15 to 29% helium, preferably at least 20% helium.

4. Plasma spraying gas according to one of Claims 1 to 3, **characterized in that** it contains from 6 to 14% hydrogen, preferably from 8 to 12% hydrogen, more preferably 10% ± 1% hydrogen.

5. Plasma spraying gas according to one of Claims 1 to 4, **characterized in that** it contains 70% ± 5% argon.

6. Plasma spraying gas according to one of Claims 1 to 5, **characterized in that** it comprises approximately 10% hydrogen, from 20 to 25% helium, the remainder being argon and, possibly, impurities.

7. Application of the plasma spraying gas according to one of Claims 1 to 6 to the plasma spraying of at least one powder of a refractory material and/or of at least one metallic material.

8. Thermal spraying process able to employ a plasma spraying gas according to one of Claims 1 to 6.

9. Thermal treatment process according to Claim 8, **characterized in that** the plasma spraying gas is delivered by a low-power torch.

10. Process for producing a ternary gas mixture for plasma spraying, according to one of Claims 1 to 6, **characterized in that** the gas mixture is produced at the site of use.
